# EUROPÄISCHE PATENTSCHRIFT

(11) **EP 1 157 488 B1**
(45) Veröffentlichungstag und Bekanntmachung des Hinweises auf die Patenterteilung: **15.12.2004**
(21) Anmeldenummer: 00925027.5
(22) Anmeldetag: 01.03.2000
(51) Int. Cl.: H04B 10/155, H04B 10/18

(54) **VERFAHREN UND ANORDNUNG ZUR OPTIMIERUNG DER IMPULSFORM EINES AMPLITUDENMODULIERTEN OPTISCHEN SIGNALS**
METHOD AND SYSTEM FOR OPTIMISING THE PULSE FORM OF AN AMPLITUDE MODULATED OPTICAL SIGNAL
PROCEDE ET DISPOSITIF POUR L'OPTIMISATION DE LA FORME D'IMPULSION D'UN SIGNAL OPTIQUE MODULE EN AMPLITUDE

(30) Priorität: 01.03.1999 DE 19908813
(43) Veröffentlichungstag der Anmeldung: 28.11.2001
(73) Patentinhaber: SIEMENS AKTIENGESELLSCHAFT, 80333 München (DE)
(72) Erfinder: WÜNSCHE, Ullrich, D-81476 München (DE); PRÖBSTER, Walter, D-81545 München (DE)
(86) Internationale Anmeldenummer: PCT/DE2000/000630
(87) Internationale Veröffentlichungsnummer: WO 2000/052855

(56) Entgegenhaltungen:
- EP-A- 0 971 493
- GB-A- 2 308 675
- GB-A- 2 316 821
- US-A- 5 629 792

## Beschreibung

Die Erfindung betrifft Verfahren nach dem Oberbegriff des Patentanspruchs 1 und eine Anordnung nach dem Oberbegriff des Anspruchs 6.

In optischen Netzen erfolgt die Übertragung von Digitalsignalen häufig mit Hilfe der Amplitudenmodulation (ASK). Bei einem logischen Zustand wird eine Trägerwelle übertragen, während des anderen logischen Zustands wird kein Signal übertragen. Bereits bei der Modulation (on-off) entsteht ein sog. Chirp, bei dem sich die Wellenlänge des abgegebenen Signals und auch dessen Amplitude ändert. Der transiente Anteil des Chirps bewirkt im Bereich der Flanken größere Veränderungen, eine starke Vergrößerung oder Verringerung, der Wellenlänge, wobei besonders die Einschaltflanke von Bedeutung ist, da die Änderungen bei vollem Signalpegel auftreten. Der andere, der adiabatische Anteil am Chirp läßt sich durch einen geeigneten Aufbau des Modulators gering halten.

Während der Übertragung des Impulses in einem Wellenleiter (Glasfaser) kommt es zur Selbstphasenmodulation des Trägers, einer weiteren Form des Chirps, bei der sich ebenfalls besonders im Vorderflankenbereich und Rückflankenbereich des Impulses die Wellenlänge ändert. Zusätzlich können Amplitudenverzerrungen auftreten.

Durch beide Wellenlängenverzerrungen, den transienten Anteil des einschaltbedingten Chirps und der Selbstphasenmodulation kommt es zu Impulsverzerrungen des Basisbandsignals, die besonders bei Übertragungssystemen mit hohen Biträten zur Begrenzung der Datenrate und der Übertragungsreichweite beitragen.

Durch im Prüffeld durchgeführte Einstellungen von Arbeitspunkten von Mach-Zehnder-Modulatoren oder integrierten Elektro-Absorbtions-Modulatoren wird Üblicherweise versucht, die chirp-bedingten Störeinflüsse zu minimieren. Bei Änderungen der Betriebsparameter müssen dann jedoch Neueinstellungen vorgenommen werden.

Aus GB 2 308 675 A sind eine Anordnung und ein Verfahren zur Ansteuerung eines optischen Modulators bekannt.;Die Druckschrift beschreibt das Einstellen eines Chirp-Parameters. Eine Überwachung des modulierten Signals erfolgt empfangsseitig, um die Chirp-Parameter über einen Rückkanal zur Impulskompression einzustellen.

Die GB 2 316 821 A beschreibt ein optisches Zeitmultiplexsystem, das durch gesteuertes Chirpen des Sendesignals die chromatische Dispersion der Übertragungsstrecke kompensiert. Eine Überwachung des modulierten Signals ist nicht vorgesehen.

Aus der älteren Anmeldung EP 0 971 493 A2 beschreibt ebenfalls ein Verfahren zur Kompensation von Dispersion und Nichtlinearitäten bei optischen Kommunikationssystemen. Bei diesem System wird jedoch als Parameter beispielsweise die Fehlerrate gemessen und der Sendepegel geregelt. Beide Maßnahmen scheinen bei modernen optischen Systemen nicht zweckmäßig zu sein.

Aufgabe der Erfindung ist es daher, ein Verfahren und eine Anordnungen zur dauerhaften Optimierung der Impulsform/Spektralverteilung eines amplitudenmqdulierten optischen Signals insbesondere unter Berücksichtigung des modulationsbedingten Chirps und der Selbstphasenmodulation in optischen Übertragungssystemen anzugeben.

Lösungen dieser Aufgabe sind in den unabhängigen Ansprüchen angegeben. Vorteilhafte Weiterbildungen der Erfindung sind in den Unteransprüchen angegeben.

Die erfindungsgemäßen Maßnahmen bestehen darin, daß aufgrund von Qualitätskriterien für eine optimale Modulation des optischen Signals der Arbeitspunkt des Modulators eingestellt und die optimale Einstellung durch einen Regelkreis beibehalten wird.

Eine vorteilhafte und einfache Lösung ist es, vom modulierten optischen Digitalsignal ein Meßsigrial abzuzweigen und dies einem Frequenzdiskriminator zuzuführen. Dessen Ausgangssignal wird - über eine Regeleinrichtung geführt - die den Arbeitspunkt des Modulators bestimmt.

Wird das Meßsignal sendeseitig abgenommen, können die Eigenschaften der Übertragungsstrecke durch ein einstellbares Referenzsignal berücksichtigt werden. Das Ausgangssignal des Modulators wird so eingestellt, daß sich ein optimales Empfangssignal ergibt.

Steht ein Rückkanal, in der Regel ein Servicekanal, zur Verfügung, so kann vom Basisbandsignal ein Meßsignal abgezweigt und ausgewertet werden. Das von einem Phasendiskriminator abgegebene Spektrakverteilungssigrial oder ein hieraus erzeugtes Regelsignal wird zur Quelle des Signals, dem Modulator, übertragen werden.

Die Erfindung wird anhand eines Ausführungsbeispiels näher erläutert.

Es zeigen:

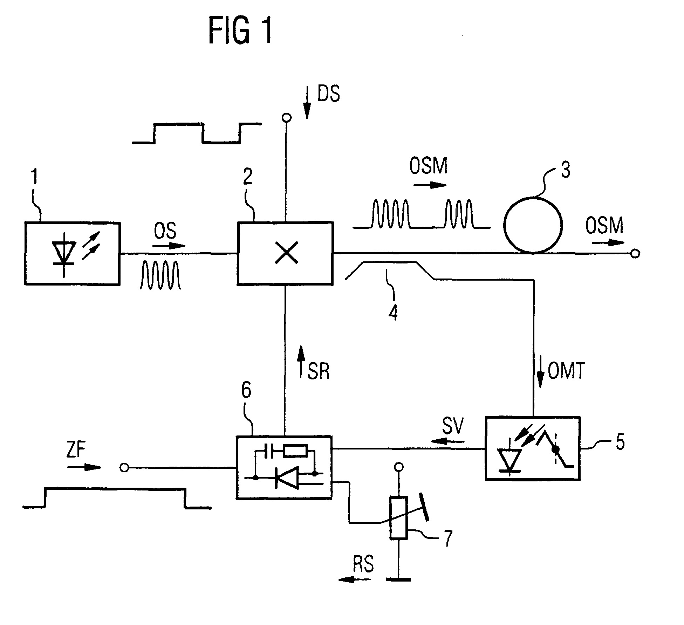

- Figur 1: ein erstes Ausführungsbeispiel mit Spektralbewertung

Figur 1 zeigt ein erstes Ausführungsbeispiel eines Regelkreises zur Optimierung des modulationsbedingten Chirps. Das Prinzipschaltbild zeigt nur für die Erfindung wesentliche Baugruppen. Ein als schmalbandige Lichtquelle 1 vorgesehener Laser liefert ein optisches Signal OS mit hoher Frequenz, das einem Modulator 2 zugeführt wird. Dieser wird durch ein Digitalsignal DS amplitudenmoduliert (On-Off-Keying). Das vom Modulator abgegebene modulierte optische Signal OSM wird in einen Lichtwellenleiter einer Übertragungsstrecke 3 eingespeist und übertragen. Über einen Splitter (Koppler) 4 wird vom modulierten Signal ein Meßsignal OMT geringer Leistung abgezweigt und einem Frequenzdiskriminator 5 zugeführt. Dieser kann beispielsweise ein optisches Filter enthalten, dessen möglichst geradlinige Flanke zur Frequenzdemodulation verwendet wird. Das demodulierte optische Signal wird in ein elektrisches Spektralverteilungssignal SV umgesetzt und einer Regeleinrichtung 6 zugeführt. Dieser wird als Führungsgröße ein einstellbares Referenzsignal RS zugeführt, das über eine Referenzeinstelleinrichtung 7, im Beispiel ein Spannungsteiler, erzeugt wird. Die Regeleinrichtung liefert :als Stellgröße ein Regelsignal SR, das den Arbeitspunkt des Modulators einstellt und damit den transienten Chirp des modulierten optischen Signals auch bei Änderungen der Bauteileeigenschaften optimiert.

Eine optimale Einstellung ist gegeben, wenn das Empfangssignal optimal ist. Hierzu ist eigentlich eine Messung auf der Empfangsseite erforderlich. Eine für die Einstellung verwendete kompakte Ersatz-Übertragungsstecke ermöglicht aber ebenfalls eine genaue Einstellung. Das Spektralverteilungssignal dient bei der Einstellung als Kriterium. Diesem entspricht eine spezielle Hüllkurve des modulierten Signals, die ebenfalls als Kriterium dienen kann.

Sind die Eigenschaften der Übertragungsstrecke bekannt, so werden bereits diese bei der Einstellung berücksichtigt und die Spektralverteilung (bzw. die Impulsform) wird so eingestellt, daß sich optimale Empfangsverhältnisse ergeben.

Da das Spektralverteilungssignal SV im geringen Maß abhängig von der von der Bitfolge des Digitalsignals sein kann, kann ein Zeitfenster ZF zweckmäßig sein, während dessen Dauer bestimmte Bitfolgen übertragen werden und das Regelsignal ermittelt wird.

Zu ergänzen ist noch, daß das Regelsignal RS und das Digitalsignal durch einen Addierer zusammengefaßt werden können und das Summensignal dann dem Modulationseingang des Modulators zugeführt wird.

Selbstverständlich kann auch, wie bei der in Figur 1 dargestellten Anordnung, die Bewertung der Spektralverteilung des modulierten optischen Signals empfangsseitig vorgenommen werden und ein entsprechendes Spektralverteilungssignal oder auch das daraus abgeleitete Regelsignal zum Sendeteil übertragen wird.

### Bezugszeichenliste

- DS: Digitalsignal
- DD: demoduliertes Digitalsignal
- 1: Laser
- 2: Modulator
- 3: Lichtwellenleiter
- 4: Splitter
- 5: Diskriminator
- 6: Regeleinrichtung
- 7: Referenz-Einstelleinrichtung
- RS: Referenzsignal
- OS: optisches Signal
- OSM: amplitudenmoduliertes optisches Signal
- OMT: Meßsignal
- SV: Spektralvergleichssignal
- SF: Regelsignal
- ZF: Zeitfenster
- 8: Summationseinrichtung
- 9: Empfangseinrichtung
- 10: optoelektrischer Wandler
- 11: Verstärker
- 12: Entscheider
- 13: Datenausgang
- 14: Meßeinrichtung-Bewertungseinrichtung
- 15: Auswerteeinrichtung
- 16: Steuerung
- 17: Modulationseingang
- 18: Sendeeinrichtung
- 19: Empfangseinrichtung
- SE: Einstellsignal

## Patentansprüche

1. Verfahren zur Optimierung eines amplitudenmodulierten optischen Signals (OSM), das in einem Modulator (2) durch Modulation eines optischen Signals (OS) mit einem Digitalsignal (DS) erzeugt wird,
**dadurch gekennzeichnet,**
**daß** das amplitudenmodulierte optische Signal (OSM) einem Frequenzdiskriminator (5) zugeführt wird, der dieses optische Signal frequenzdemoduliert und das demodulierte optische Signal in ein elektrisches Spektralverteilungssignal (SV) umsetzt,
**daß** das Spektralverteilungssignal (SV) einer Regeleinrichtung (6) zugeführt wird, der außerdem ein einstellbares Referenzsignal (RS) zugeführt wird, und
**daß** durch den Vergleich beider Signale ein Regelsignal (SR) erzeugt wird, das den Arbeitspunkt des Modulators (2) einstellt.

2. Verfahren nach Anspruch 1,
**dadurch gekennzeichnet,**
**daß** vom amplitudenmodulierten optischen Signal (OSM) ein Meßsignal (OMT) abgetrennt wird, das dem Frequenzdiskriminator (5) zugeführt wird.

3. Verfahren nach Anspruch 1 oder 2,
**dadurch gekennzeichnet,**
**daß** das Spektralverteilungssignal (SV) am Anfang einer Übertragungsstrecke ermittelt wird, und daß das Referenzsignal (RS) unter Berücksichtigung der Eigenschaften der Übertragungsstrecke (3)eingestellt wird.

4. Verfahren nach Anspruch 1 oder 2,
**dadurch gekennzeichnet,**
**daß** das Spektralverteilungssignal (SV) empfangsseitig ermittelt wird und
**daß** das Spektralverteilungssignal (SV) oder ein hieraus erzeugtes Regelsignal (SR) zum sendeseitig vorgesehenen Modulator (2) übertragen wird.

5. Verfahren nach einem der vorhergehenden Ansprüche,
**dadurch gekennzeichnet,**
**daß** das Regelsignal (SR) während periodisch auftretender Zeitfenster (ZF) gewonnen wird.

6. Anordnung zur Optimierung eines amplitudenmodulierten optischen Signals (OSM) mit einer Lichtquelle (1) und einem Modulator (2), dem von der Lichtquelle (1) ein optisches Signal (OS) und zur Amplitudenmodulation ein Digitalsignal (DS) zugeführt werden,
**dadurch gekennzeichnet,**
**daß** an den Ausgang des Modulators (2) über einen Splitter (4) ein Frequenzdiskriminator (5) angeschaltet ist, der dieses optische Signal frequenzdemoduliert und das demodulierte optische Signal in ein elektrisches Spektralverteilungssignal (SV) umsetzt,
**daß** eine Regeleinrichtung (6) mit einer Referenzsignal-Einstellvorrichtung (7) vorgesehen ist, der das Spektralverteilungssignal (SV) zugeführt wird und die ein Regelsignal (SR) erzeugt, das den Arbeitspunkt des Modulators (2) steuert.

7. Anordnung nach Anspruch 6,
**dadurch gekennzeichnet,**
**daß** ein Addierer vorgesehen ist, dem das Regelsignal (SR) und das Digitalsignal (DS) zugeführt werden und
**daß** der Addierausgang an einen Modulationseingang des Modulators (2) geführt ist.

## Claims

1. Method for optimizing an amplitude-modulated optical signal (OSM), which is generated in a modulator (2) by modulating an optical signal (OS) with the aid of a digital signal (DS),
**characterized**
**in that** the amplitude-modulated optical signal (OSM) is fed to a frequency discriminator (5) which frequency-demodulates this optical signal and converts the demodulated optical signal into an electrical spectral distribution signal (SV),
**in that** the spectral distribution signal (SV) is fed to a control device (6) which is also fed a adjustable reference signal (RS), and
**in that** the control signal (SR) which sets the operating point of the modulator (2) is generated by comparing the two signals.

2. Method according to Claim 1,
**characterized**
**in that** a measuring signal (OMT) which is fed to the frequency discriminator (5) is separated from the amplitude-modulated optical signal (OSM).

3. Method according to Claim 1 or 2,
**characterized**
**in that** the spectral distribution signal (SV) is determined at the start of a transmission path, and in that the reference signal (RS) is set taking account of the properties of the transmission path (3).

4. Method according to Claim 1 or 2,
**characterized**
**in that** the spectral distribution signal (SV) is determined at the receiving end, and
**in that** the spectral distribution signal (SV) or a control signal (SR) generated therefrom is transmitted to the modulator (2) provided at the transmitting end.

5. Method according to one of the preceding claims,
**characterized**
**in that** the control signal (SR) is obtained during periodically occurring time windows (ZF).

6. Arrangement for optimizing an amplitude-modulated optical signal (OSM), having a light source (1) and a modulator (2) to which there are fed an optical signal (OS) from the light source (1) and a digital signal (DS) for amplitude modulation,
**characterized**
**in that** a frequency discriminator (5) which frequency-demodulates this optical signal and converts the demodulated optical signal into an electrical spectral distribution signal (SV) is connected to the output of the modulator (2) via a splitter (4),
and **in that** a control device (6) is provided with a reference signal setting device (7) which is fed the spectral distribution signal (SV) and which generates a control signal (SR) which controls the operating point of the modulator (2).

7. Arrangement according to Claim 6,
**characterized**
**in that** an adder is provided which is fed the control signal (SR) and the digital signal (DS), and
**in that** the adder output is fed to a modulation input of the modulator (2).

## Revendications

1. Procédé pour l'optimisation d'un signal optique modulé en amplitude (OSM), qui est généré dans un modulateur (2) par modulation d'un signal optique (OS) au moyen d'un signal numérique (DS),
**caractérisé en ce que**
le signal optique modulé en amplitude (OSM) est amené à un discriminateur de fréquence (5) qui convertit ce signal optique modulé en fréquence et le signal optique démodulé en un signal électrique de distribution spectrale (SV),
**en ce que** le signal de distribution spectrale (SV) est amené à un dispositif de réglage (6), auquel un signal de référence (RS) réglable est en outre amené, et
**en ce que**, par la comparaison des deux signaux, un signal de réglage (SR) est créé, celui-ci réglant le point de travail du modulateur (2).

2. Procédé selon la revendication 1,
**caractérisé en ce que**
un signal de mesure (OMT) est séparé du signal optique modulé en amplitude (OSM), ce signal de mesure étant amené au discriminateur de fréquence (5).

3. Procédé selon la revendication 1 ou 2,
**caractérisé en ce que**
le signal de distribution spectrale (SV) est déterminé au début d'un trajet de transmission, et **en ce que** le signal de référence (RS) est réglé en tenant compte des caractéristiques du trajet de transmission (3).

4. Procédé selon la revendication 1 ou 2,
**caractérisé en ce que**
le signal de distribution spectrale (SV) est déterminé du côté réception et
**en ce que** le signal de distribution spectrale (SV) ou un signal de réglage (SR) généré à partir de ce signal est transmis au modulateur (2) prévu du côté émission.

5. Procédé selon l'une quelconque des revendications précédentes,
**caractérisé en ce que**
le signal de réglage (SR) est obtenu pendant des fenêtres de temps (ZF) se produisant périodiquement.

6. Dispositif pour l'optimisation d'un signal optique modulé en amplitude (OSM) au moyen d'une source de lumière (1) et d'un modulateur (2), auquel sont amenés un signal optique (OS) par la source de lumière (1) ainsi qu'un signal numérique (DS) pour la modulation d'amplitude,
**caractérisé en ce que**
un modulateur de fréquence (5) est connecté à la sortie du mod ulateur (2) par l'intermédiaire d'un répartiteur (4), ce modulateur de fréquence convertissant ce signal optique modulé en fréquence et le signal optique démodulé en un signal électrique de distribution spectrale (SV),
**en ce qu'**un dispositif de réglage (6) doté d'un dispositif de réglage de signal de référence (7) est prévu, auquel le signal de distribution spectrale (SV) est amené et qui génère un signal de réglage (SR) commandant le point de travail du modulateur (2).

7. Dispositif selon la revendication 6,
**caractérisé en ce que**
un additionneur est prévu, auquel le signal de réglage (SR) et le signal numérique (DS) sont amenés, et
**en ce que** la sortie de l'additionneur est menée sur une entrée de modulation du modulateur (2).
